# EUROPÄISCHE PATENTSCHRIFT

(11) **EP 0 455 950 B1**
(45) Veröffentlichungstag und Bekanntmachung des Hinweises auf die Patenterteilung: **30.08.1995**
(21) Anmeldenummer: 91103370.2
(22) Anmeldetag: 06.03.1991
(51) Int. Cl.: F16N 39/00, F16N 19/00, F15B 1/26

(54) **Rücklaufbehälter für Ölumlaufschmierungen**
Return reservoir for closed circulation lubrification system
Réservoir de retour pour un système de graissage à circuit fermé

(30) Priorität: 10.05.1990 DE 4014955
(43) Veröffentlichungstag der Anmeldung: 13.11.1991
(73) Patentinhaber: HYDAC TECHNOLOGY GMBH, D-66280 Sulzbach (DE)
(72) Erfinder: Stach, Gerd, W-8430 Neumarkt (DE)
(74) Vertreter: Patentanwälte Bartels und Partner

(56) Entgegenhaltungen:
- DE-A- 2 438 551
- DE-B- 1 038 847
- FR-A- 1 576 690
- US-A- 2 660 309

## Beschreibung

Die Erfindung betrifft einen Öl enthaltenden Rücklaufbehälter mit Anschlüssen für eine Rücklaufleitung und eine Ansaugleitung.

Ein bekannter Rücklaufbehälter für Ölumlaufschmierungen (DE-A-28 44 076) ist durch eine senkrechte, im Abstand vom Behälterdeckel endende und dadurch einen Überlauf gestattende Trennwand in eine Rücklaufkammer und eine Ansaugkammer unterteilt. In die Rücklaufkammer ragt eine den Behälterdeckel durchdringende Rücklaufleitung, in die Ansaugkammer eine ebenfalls den Behälterdeckel durchdringende Ansaugleitung, die beide als Tauchrohr ausgebildet sind. Die Rücklaufleitung ist, da sie immer für den Kaltstart ausgelegt sein muß, unter normalen Betriebsbedingungen nur bis zu etwa 20 % gefüllt. Nachteilig ist hierbei, daß in den Ölrücklaufstrom Luft aus der Maschine eingetragen wird, wobei die Luftmenge bis zu 10 % der Ölmenge des Rücklaufstromes erreichen kann. Nach dem Austritt aus dem Tauchrohr steigt die Luft in Form von Blasen auf, die beim Zerplatzen an der Öloberfläche Öldunst im Behälter entstehen lassen. Da die Rücklaufleitung in der Maschine über die Lagerlabyrinthe mit der Atmosphäre in Verbindung steht, gelangen ferner beträchtliche Mengen an Schmutz und Feuchtigkeit in das Öl.

Ferner ist es bei einem Fremdstoffabscheider für eine Ölumlaufanlage bekannt (DE-A-24 38 551), unter dem Einlauf eines Behälters in diesem eine in Fließrichtung des Öles geneigte Rinne anzuordnen, die mit Staustufen versehen ist, welche eine Vielzahl von Durchlässen für das Öl aufweisen, und an einer Verlängerung der letzten Staustufe ein Leitblech anzubringen, welches in den dem Auslauf des Behälters gegenüberliegenden Teil hineinragt und das von Lufteinschlüssen bereinigte Öl dem Sumpf des Behälters zuführt. Ein solcher Abscheider läßt sich jedoch allenfalls den bekannten Rücklaufbehältern nachschalten, nicht jedoch in diese integrieren, da hierfür in den bekannten Rücklaufbehältern kein Raum vorhanden ist.

Der Erfindung liegt die Aufgabe zugrunde, einen verbesserten Rücklaufbehälter für Ölumlaufschmierungen zu schaffen. Diese Aufgabe löst ein Rücklaufbehälter mit den Merkmalen des Anspruches 1.

Durch die Unterteilung des Behälters in drei Kammern und die Verbindung der Rücklaufkammer über ein Siphon mit der Überlaufkammer kann bereits ein erheblicher Teil der vom rücklaufenden Öl mitgeführten Luft in der Rücklaufkammer vom Öl abgetrennt werden, weil sowohl das Auftreffen des rücklaufenden Öles auf die Öloberfläche in der Rücklaufkammer als auch der Siphon die Luftabscheidung in der Rücklaufkammer begünstigen. Ferner unterstützt der die Überlaufkammer mit der Ansaugkammer verbindende Kanal dadurch, daß er gegen die Ansaugkammer hin ansteigt, eine thermisch beschränkte Strömung des Öles von der Überlaufkammer in die Ansaugkammer.

Mittels des Überlaufbleches im Anschluß an den ansteigenden Abschnitt des Siphons und des Ablaufverteilers laßt sich der aus dem Siphon austretende Ölstrom in einen dünnen Film umwandeln, das mit so geringer Geschwindigkeit auf die Öloberfläche in der Überlaufkammer auftrifft, daß keine Verwirbelung und eine damit verbundene Einbringung von Luft in das Öl eintreten.

Es ist zwar bereits ein Rücklaufbehälter der eingangs genannten Art bekannt (FR-A-1 576 690), der eine Rücklaufkammer, mehrere, sich an diese anschließende und Siphone bildende Zwischenkammern sowie eine Überlaufkammer aufweist, die durch eine Filterwand von einer Ansaugkammer getrennt ist. Aus der letzten Zwischenkammer gelangt die der Ansaugkammer zuzuführende Flüssigkeit auf eine zu ihrem freien Ende hin fallende Ablauffläche, von deren freiem Ende die Flüssigkeit im freien Fall auf die sich bereits in der Überlaufkammer befindende Flüssigkeit auftrifft. Dieser vorzugsweise zur Abscheidung von Verunreinigungen aus einer Hydraulikflüssigkeit dienende Rücklaufbehälter kann in eine Ölumlaufschmierung nicht einbezogen werden, weil bei ihm ausgeschiedene Gase nicht abgeführt werden können. Es können nur sich auf dem Boden der Kammern absetzendes Material und im Rücklaufbehälter unten ansammelndes Wasser aus dem Rücklaufbehälter entfernt werden.

Um in einfacher, aber dennoch wirksamer Weise größere Partikel abscheiden zu können, ist im Boden der Rücklaufkammer wenigstens eine Öffnung vorgesehen, von der aus sich ein Filterkorb in den anschliessenden, fallenden Abschnitt des Syphons erstreckt. Ein solcher, vorzugsweise aus einem Drahtgewebe bestehender Filterkorb bietet außerdem den Vorteil, daß er die Strömungsgeschwindigkeit des Öles reduziert, wodurch das Abscheiden mitgeführter Luft, in Form von Luftblasen gefördert wird. Diesem Zwecke dienen bei einem vorteilhaften Ausführungsbeispiel auch ein Ultraschallsender, dessen abgestrahlte Energie auf den Inhalt der Rücklaufkammer einwirkt, sowie eine schiefe Ebene, welche das untere Ende des fallenden und dasjenige des steigenden Abschnittes des Siphons abschließt und gegen den steigenden Abschnitt hin ansteigt. Damit die hier aufsteigenden Luftblasen nicht in die Überlaufkammer gelangen, ist es ferner zweckmäßig, wenn der untere Endabschnitt einer den fallenden vom steigenden Abschnitt des Siphons trennenden Wand zum steigenden Abschnitt hin abgebogen ist. Außerdem kann dieser abgebogene Abschnitt zusammen mit dem Boden des Siphons eine Verengung bilden, welche die Strömungsgeschwindigkeit im fallenden Abschnitt des Siphons noch weiter reduziert und dadurch die Luftabscheidung begünstigt. Die im fallenden Abschnitt des Siphons aufsteigenden Luftblasen werden vorzugsweise durch einen neben der Überlaufkammer angeordneten Kanal zurückgeführt, welcher oben in die Rücklaufkammer mündet.

Bei einer bevorzugten Ausführungsform ist der die Überlaufkammer mit der Ansaugkammer verbindende Kanal auf der Seite der Überlaufkammer durch ein Lochblech gebildet. Dieses Lochblech reduziert die Strömungsgeschwindigkeit des von der Überlaufkammer zur Ansaugkammer strömenden Öls erheblich.

Vorzugsweise ist die Rücklaufkammer mit Anschlüssen für eine Ansaugleitung und eine Rücklaufleitung eines Separators versehen, welcher außer Schmutz und Wasser auch Luft aus dem Schmieröl ausscheidet. Dies wird dadurch gefördert, daß das sich in der Rücklaufkammer befindliche Öl die höchste Temperatur hat. Mit Hilfe des Separators läßt sich der Öldunst in der Überlaufkammer und auch der Ansaugkammer weitgehend reduzieren.

Mittels eines Verdichters, dessen Ansaugseite oben an die Ansaugkammer angeschlossen ist, eines Wärmetauschers und eines diesem nachgeschalteten Zyklons, dessen Auslaß mit dem Luftraum über der Überlaufkammer verbunden ist, läßt sich eine sehr wirksame Trocknung der Behälterluft erreichen, wobei außerdem eine Kontaminierung dieser Luft vermieden wird und die Luftfiltrationsarbeit sich auf den Luftdruckwechsel beschränkt. Eine besonders hohe Wirksamkeit des Zyklons läßt sich dann erreichen, wenn dessen Einlaß so ausgebildet ist, daß die Rotationsrichtung der üblichen Rotationsrichtung entgegengerichtet ist.

Der Luftraum der Überlaufkammer ist mit dem Luftraum der Ansaugkammer verbunden, und zwar bei einer bevorzugten Ausführungsform mittels wenigstens eines Rohres, das die Rücklaufkammer durchdringt. Durch dieses Rohr kann die vom Zyklon kommende, relativ kühle und trockene Luft, welche mit dem Ölfilm auf dem Überlaufblech reagiert, in den Luftraum der Ansaugkammer gelangen, wo sie erneut vom Verdichter angesaugt wird.

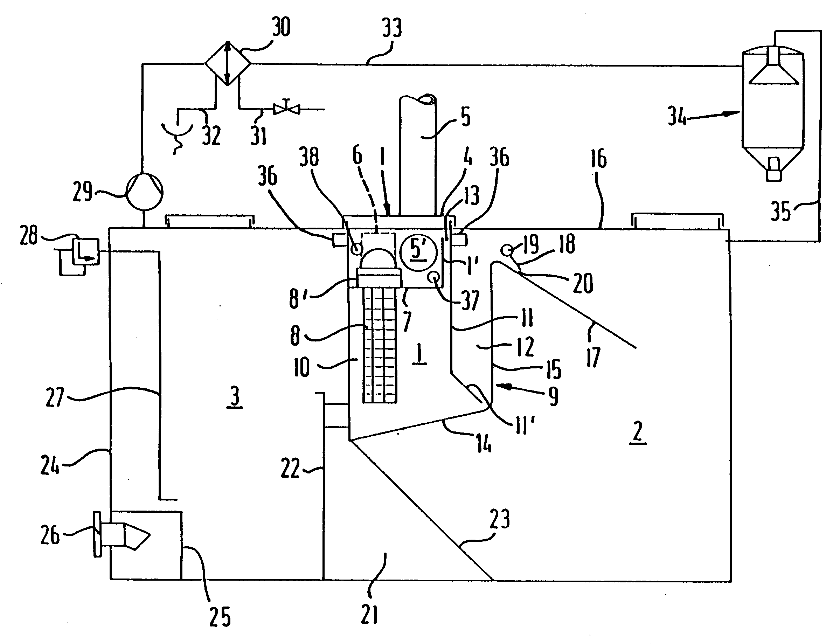

Im folgenden ist die Erfindung anhand eines in der Zeichnung dargestellten Ausführungsbeispiels im einzelnen erläutert.

Die einzige Figur zeigt eine schematische Darstellung des Ausführungsbeispiels.

Ein quaderförmiger Rücklaufbehälter für eine Ölumlaufschmierung, der sich über die gesamte Breite des Ölvorratstankes erstreckt, ist in eine Rücklaufkammer 1, eine Überlaufkammer 2 und eine Ansaugkammer 3 unterteilt. Die Rücklaufkammer 1 , die zwischen der Überlaufkammer 2 und der Ansaugkammer 3 angeordnet ist, hat zwar in der Richtung lotrecht zur Zeichenebene die gleiche Länge wie die beiden andern Kammern, ist jedoch wesentlich schmäler als diese und hat auch eine wesentlich geringere Höhe als die Überlaufkammer 2 und die Ansaugkammer 3. Ein abnehmbarer Deckel 4 gestattet von oben her den Zugang zur Rücklaufkammer 1. In der die eine der beiden freiliegenden Schmalseiten bildenden Seitenwand ist die Mündungsöffnung 5' einer Rücklaufleitung 5 vorgesehen, die eine Sammelleitung für das zum Rücklaufbehälter zurückzuführende Öl bildet. An der die Mündungsöffnung 5' aufweisenden Seitenwand oder der gegenüberliegenden, ebenfalls freiliegenden Seitenwand ist ein Ultraschallsender 6 vorgesehen, dessen Ultraschallenergie in Längsrichtung der Rücklaufkammer 1 auf deren Inhalt einwirkt.

Der ebene Boden 7 der quaderförmigen Rücklaufkammer 1 befindet sich, wie die Fig. zeigt, in einem Abstand von der Oberseite des Rücklaufbehälters, der etwa ein Viertel der Höhe des Rücklaufbehälters entspricht. Im Boden 7 sind mehrere in Längsrichtung der Rücklaufkammer 1 im Abstand voneinander angeordnete Durchgangsöffnungen vorgesehen, in welche von oben her je ein Filterkorb 8 eingesetzt ist. Diese Filterkörbe 8, die von einem Kopfteil 8' getragen werden, der sich innerhalb der Rücklaufkammer 1 befindet, bestehen im Ausführungsbeispiel aus einem Drahtgewebe und dienen dazu, große Partikel, beispielsweise Papier- und Filzfasern, zurückzuhalten.

Die Filterkörbe 8 erstrecken sich in den sich an den Boden 7 anschließenden, fallenden Abschnitt 10 eines Siphons 9, welcher die Rücklaufkammer 1 mit der Überlaufkammer 2 verbindet. Der Siphon 9 erstreckt sich in der Längsrichtung der Rücklaufkammer 1 wie diese über die gesamte Länge des Rücklaufbehälters, so daß sowohl sein fallender Abschnitt 10 als auch der von diesem durch eine vertikale Trennwand 11 getrennte, steigende Abschnitt 12 im wesentlichen quaderförmig sind. Die Trennwand 11 verläuft im Abstand neben der die Rücklaufkammer 1 auf der Seite der Überlaufkammer 2 begrenzenden Seitenwand 1', welche unterhalb des Niveaus endet, auf dem der obere Rand der übrigen Seitenwände der Rücklaufkammer 1 liegt. Dadurch steht der von der Trennwand 11 und der Seitenwand 1' begrenzte Luftblasensteigkanal 13 mit dem Inneren der Rücklaufkammer 1 in Verbindung.

Der fallende Abschnitt 10 des Siphons 9 ist unten in einer Höhe, die zu einem Drittel der Gesamthöhe des Rücklaufbehälters 1 entspricht, durch ein Bodenblech 14 abgeschlossen, das auch den steigenden Abschnitt 12 nach unten hin abschließt und eine zu letzterem hin ansteigende schiefe Ebene bildet. Wie die Fig. zeigt, ist ein unterer Endabschnitt 11' der Trennwand 11 in den steigenden Abschnitt 12 hinein abgewinkelt, der eine wesentlich kleinere Breite hat als der fallende Abschnitt 10. Der schräg nach unten verlaufende Endabschnitt 11' bildet zusammen mit dem Bodenblech 14 eine sich in Strömungsrichtung keilförmig verjüngende Drosselstrecke, deren engste Stelle sich im Bereich des Übergangs vom Bodenblech 14 zu derjenigen Seitenwand 15 des steigenden Abschnittes 12 liegt, welche letzteren von der Überlaufkammer 2 trennt.

Wie die Fig. zeigt, schließt sich an den oberen Rand der Seitenwand 15, der etwas höher als der Boden 7 der Rücklaufkammer 1, aber im Abstand unterhalb einer die Oberseite des Rücklaufbehälters bildenden und die drei Kammern nach oben hin begrenzenden Platte 16 liegt, über eine Abrundung ein Überlaufblech 17 an, das sich über die gesamte Länge der Überlaufkammer 2 erstreckt und eine von der Abrundung zu der zu dieser parallelen freien Kante hin fallende schiefe Ebene bildet. Das Niveau der Abrundung bestimmt den Ölpegel in der Rücklaufkammer 1. Oberhalb der sich an die Abrundung anschließenden Anfangszone des Überlaufbleches 17 ist eine Leiste 18 als Ablaufverteiler angeordnet, deren einer Längsrand mit einer Welle 19 verbunden ist, die sich parallel zur Abrundung über die gesamte Länge der Überlaufkammer 2 erstreckt. Mit Hilfe der Leiste 18 und der Welle 19 läßt sich zwischen dem Überlaufblech 17 und der freien Längskante der Leiste 18 ein Spalt 20 wählbarer Weite einstellen.

Von der Überlaufkammer 2 führt ein Kanal 21 zu der Ansaugkammer 3. Dieser Kanal 21 ist zur Ansaugkammer 3 hin durch eine vertikale Wand 22 begrenzt, die sich vom Boden des Rücklaufbehälters aus nach oben bis in einen Bereich erstreckt, der höher liegt als das Bodenblech 14 des Siphons 9. Das obere, im Querschnitt verengte Endstück des Kanales 21 ist deshalb zum Siphon 9 hin durch die eine Seitenwand des fallenden Abschnittes 10 begrenzt. Gegen die Überlaufkammer 2 hin ist der Kanal 21 durch ein Lochblech 23 begrenzt, das unterhalb des Siphons 9 angeordnet ist und sich von demjenigen Rand des Bodenbleches 14, welcher der Wand 22 benachbart ist, schräg nach unten in einer schiefen Ebene liegend bis zum Boden der Überlaufkammer 2 hin erstreckt, und zwar in einem Bereich, der unterhalb der Seitenwand 15 des steigenden Abschnitts 12 des Siphons 9 liegt.

In der durch den Boden der Ansaugkammer 3 und die zur Wand 22 parallelen Außenwand 24 begrenzten unteren Eckzone ist ein Lochblechkasten 25 vorgesehen, in den hinein ein Ansaugstutzen 26 ragt, an welchen die Ansaugleitung des Schmiersystems angeschlosssen wird.

Etwas oberhalb des Lochblechkastens 25 liegt die Mündungsöffnung einer in die Ansaugkammer 3 eingeführten Einspeiseleitung 27 für Regelöl. In dieser Einspeiseleitung 27 liegt außerhalb des Rücklaufbehälters ein Druckbegrenzungsventil 28.

Die Ansaugseite eines Seitenkanalverdichters 29 ist an eine Absaugöffnung der Ansaugkammer 3 in der Platte 16 angeschlossen, um aus dem Luftraum der Ansaugkammer 3 Luft ansaugen zu können. Dem Seitenkanalverdichter ist ein Wärmetauscher 30 nachgeschaltet, der von Kühlwasser oder Betriebswasser durchflossen wird. Bei kleineren Ölumlaufschmierungen kann der Wärmetauscher 30 in die Zulaufleitung des Kühlwassers eingeschleift sein. Die ein Ventil enthaltende Kühlwasserzuleitung und die Kühlwasserableitung sind mit 31 bzw. 32 gekennzeichnet. Vom Wärmetauscher 30 führt eine als Drosselstrecke dienende Leitung 33 zum Einlaß eines Zyklons 34. Dieser Einlaß ist so ausgebildet, daß das eintretende Luft-Wasser-Gemisch eine Rotationsrichtung erfährt, die entgegen der üblichen Rotationsrichtung gerichtet ist. Bei einer Blickrichtung von oben erfolgt also die Rotation entgegen dem Uhrzeigersinn. Der Zyklon 34 hat unten eine Wasserablaßöffnung, welche mittels eines Auftriebskörpers erschließbar und freigebbar ist, Wenn ein vorgegebener Wasserstand erreicht ist, hebt der Auftriebskörper ab und gibt die Ablaßöffnung frei. Für die vom Wasser getrennte Luft führt eine Rückleitung 35 vom Zyklon 34 in den Luftraum über der Überlaufkammer 2.

Von letzterer kann Luft durch ein die Rücklaufkammer 1 durchdringendes Verbindungsrohr 36 in den Luftraum der Ansaugkammer 3 gelangen.

Das aus der Maschine zurücklaufende Öl trifft in der Rücklaufkammer 1 auf die Oberfläche des dort vorhandenen Öls. Das Ölniveau der Rücklaufkammer 1 wird durch das Niveau der Abrundung am Übergang vom steigenden Abschnitt 12 des Siphons 9 zum Überlaufblech 17 bestimmt. Es liegt deshalb im Ausführungsbeispiel etwa auf halber Höhe der Rücklaufkammer 1. Das in letzterer sich sammelnde Öl tritt in die wenig unterhalb des Ölspiegels endenden Filterkörbe 8 ein und durchströmt diese, wobei die Strömungsgeschwindigkeit des Öles reduziert wird. Die Filterkörbe halten deshalb nicht nur große Partikel, wie z.B. Papier- und Filzfasern, zurück, sondern unterstützen durch die Geschwindigkeitsreduzierung die Trennung der Luft vom Öl. Die abgetrennte Luft steigt in Form von Luftblasen nach oben. Soweit diese Luftblasen nach dem Austritt aus den Filterkörben 8 innerhalb des fallenden Abschnittes 10 des Siphons 9 entstehen, gelangen sie durch den Luftblasensteigkanal 13 in die Rücklaufkammer 1. Der abgewinkelte untere Endabschnitt 11' der Trennwand 11 leitet Luftblasen, die im Bereich des Übergangs vom fallenden Abschnitt 10 zum steigenden Abschnitt 12 aufsteigen, noch in den Luftblasensteigkanal 13, wobei die Abscheidung von Luft aus dem Öl durch die weitere Drosselung der Strömungsgeschwindigkeit durch die keilförmige Verengung zwischen dem unteren Endabschnitt 11' der Trennwand 11 und dem Bodenblech 14 begünstigt wird.

Sind die Filterkörbe 8 verblockt, also durch zurückgehaltene Partikel verstopft, kann das Öl über den Luftblasenseitenkanal 13 in den fallenden Abschnitt 10 des Siphons 9 abfließen.

Im Ausführungsbeispiel wird die Abscheidung von Luft aus dem Öl bereits in der Rücklaufkammer 1 durch den dort installierten Ultraschallsensor 6 unterstützt, dessen Schallwellen den Inhalt der Rücklaufkammer 1 beaufschlagen.

Da das in den fallenden Abschnitt 10 des Siphons einströmende Öl eine höhere Temperatur und damit eine geringere Dichte hat als das Tanköl, unterstützt die Konvektion den Durchfluß des Öls durch den steigenden Abschnitt 12 des Siphons 9. Die Strömung vom fallenden in den steigenden Abschnitt des Siphons 9 wird außerdem durch den zu letzterem hin ansteigenden Boden 14 unterstützt.

Der Ölstrom, welcher im steigenden Abschnitt 12 des Siphons 9 aufsteigt und eine möglichst gleichmäßige Verteilung über die gesamte Länge bereits durch die Verengung am unteren Endabschnitt 11' der Trennwand 11 erfährt, fließt über die Abrundung auf das Überlaufblech 17, auf dem ein dünner Ölfilm entsteht. Die Leiste 18 dient als Ablaufverteiler. Mit diesem wird, gesteuert über einen Schwimmer, abhängig von der Viskosität des Öles eine optimale Weite des Spaltes 20 eingestellt. Über die vom Überlaufblech 17 gebildete schiefe Ebene läuft das Öl mit stark reduzierter Geschwindigkeit. Da das Überlaufblech 17 in das sich in der Überlaufkammer 2 befindende Öl eintaucht, gelangt das über das Überlaufblech 17 ablaufende Öl sanft und ohne eine Eintragung von Luft auf die Öloberfläche.

Die höhere Temperatur des aus der Rücklaufkammer 1 kommenden Öles unterstützt eine Strömung des Öles aus der Überlaufkammer 2 durch den ansteigenden Kanal 21 hindurch in die Ansaugkammer 3. Das Lochblech 23 reduziert die Geschwindigkeit, mit der das Öl von der Überlaufkammer 2 in die Ansaugkammer 3 überläuft, in der es wegen seiner höheren Temperatur nach oben steigt. Durch die Einspeisung von kühlerem Regelöl über das Druckbegrenzungsventil 28 und die Einspeiseleitung 27 kann in der Ansaugkammer 3 das Temperaturgefälle erhöht werden, was das Aufsteigen des von der Überlaufkammer 2 kommenden Öles begünstigt.

Beim Durchlauf durch die Kammern des Rücklaufbehälters erfährt die Schmierflüssigkeit eine optimale, verschleißmindernde Partikelsedimentation. Außerdem wird die Schmierflüssigkeit wesentlich geringer kontaminiert als bei den bekannten Rücklaufbehältern, was eine längere Einsatzdauer der Schmierflüssigkeit ermöglicht. Dies führt zu einer erheblichen Kostenersparnis.

Sofern das Lochblech 23 verstopft sein sollte, kann die Schmierflüssigkeit durch das Verbindungsrohr 36 von der Überlaufkammer 2 in die Ansaugkammer 3 gelangen. Das Verbindungsrohr 36 dient jedoch in erster Linie als Lüftungskanal.

Eine der beiden freiliegenden Seitenwände der Überlaufkammer 1 ist mit Anschlüssen für eine Ansaugleitung 37 und eine Rücklaufleitung 38 eines nicht dargestellen Separators versehen. Wie die Fig. zeigt, liegt der Anschluß für die Ansaugleitung 37 in der unteren, der Anschluß für die Rücklaufleitung 38 in der oberen Hälfte der Rücklaufkammer 1. Der Separator scheidet außer Schmutz und Wasser auch Luft aus dem Öl ab. Da das Öl, wenn es in die Überlaufkammer 1 gelangt, die höchste Temperatur hat, werden die großen Luftblasen direkt in die Rücklaufleitung zurückgeführt. Der Öldunst in der Rücklaufkammer 1 und der Ansaugkammer 3 kann hierdurch wesentlich vermindert werden.

Mit dem Seitenkanalverdichter 29, dem Wärmetauscher 30 und dem Zyklon 34 steht ein geschlossenes System für eine rezirkulierende Behälterlufttrocknung zur Verfügung, bei dem kein Öldunst in die Außenatmosphäre und keine Luft aus der Außenatmosphäre in den Kreislauf gelangt. Es entsteht deshalb fast keine Luftfiltrationsarbeit.

Die vom Seitenkanalverdichter 29 aus dem Luftraum der Ansaugkammer 3 angesaugte Luft wird durch den Wärmetauscher 30 geblasen, bei dem es sich um einen kleinen Ölkühler handeln kann. die Abkühlung der Luft im Wärmetauscher 30 bewirkt ein ausfällen der in der Luft enthaltenen Feuchtigkeit. Das Luft-Wasser-Gemisch gelangt über die Leitung 33 in den Zyklon, in dem das Wasser sich unten sammelt und die relativ kühle, getrocknete Luft nach oben abgeleitet wird. Von dort gelangt sie über die Rücklaufleitung 35 in die Überlaufkammer 2, wo sie auf den über das Überlaufblech 17 laufenden Ölfilm auftrifft und aus diesem Feuchtigkeit aufnimmt. Durch das Verbindungsrohr 36 hindurch gelangt Luft dann wieder in den Luftraum der Ansaugkammer 3, aus dem sie erneut vom Seitenkanalverdichter 29 abgesaugt wird.

## Patentansprüche

1. Öl enthaltender Rücklaufbehälter mit Anschlüssen für eine Rücklaufleitung und eine Ansaugleitung, der in eine Rücklaufkammer (1), eine Überlaufkammer (2) und eine Ansaugkammer (3) unterteilt ist, wobei die Rücklaufkammer (1) über einen Siphon (9) mit der Überlaufkammer (2) verbunden ist und sich an einen steigenden, in die Überlaufkammer (2) mündenden Abschnitt des Siphons (9) eine in die Überlaufkammer (2) ragende und zu ihrem freien Ende hin fallende Ablauffläche anschließt,
dadurch gekennzeichnet, daß für eine Ölumlaufschmierung eines Schmiersystems
a) ein von der Überlaufkammer (2) gegen die Ansaugkammer (3) hin ansteigender Kanal (21) diese beiden Kammern (2, 3) miteinander verbindet,
b) die Ablauffläche teilweise in das sich in der Überlaufkammer (2) befindende Öl eintaucht und
c) über der durch ein Überlaufblech (17) gebildeten Ablauffläche ein sich quer zur Fließrichtung erstreckendes Ablaufverteilerelement (18) angeordnet ist, das zusammen mit dem Überlaufblech (17) einen in seiner Weite veränderbaren Spalt (20) bildet.

2. Behälter nach Anspruch 1, dadurch gekennzeichnet, daß im Boden (7) der Rücklaufkammer (1) wenigstens eine Öffnung vorgesehen ist, von der aus sich ein Filterkorb (8) in einen anschließenden, fallenden Abschnitt (10) des Siphons (9) erstreckt.

3. Behälter nach Anspruch 1 oder 2, dadurch gekennzeichnet, daß der fallende Abschnitt (10) des Siphons (9) über wenigstens einen neben der Rücklaufkammer (1) vorgesehenen Kanal (13) mit dem Inneren der Rücklaufkammer (1) im Bereich von deren oberem Endabschnitt in Verbindung steht.

4. Behälter nach einem der Ansprüche 1 bis 3, dadurch gekennzeichnet, daß sowohl der fallende als auch der steigende Abschnitt des Siphons (9) durch ein gemeinsames, eine vom fallenden zum steigenden Abschnitt hin ansteigende schiefe Ebene bildendes Bodenblech (14) begrenzt ist.

5. Behälter nach einem der Ansprüche 1 bis 4, dadurch gekennzeichnet, daß der fallende Abschnitt (10) des Siphons (9) vom steigenden Abschnitt (12) durch eine Wand (11) getrennt ist, deren unterer Endabschnitt (11') zum steigenden Abschnitt (12) hin abgebogen ist und vorzugsweise zusammen mit dem Bodenblech (14) eine Verengung bildet.

6. Behälter nach einem der Ansprüche 1 bis 5, dadurch gekennzeichnet, daß der die Überlaufkammer (2) mit der Ansaugkammer (3) verbindende Kanal (21) auf der Seite der Überlaufkammer (2) durch ein Lochblech (23) begrenzt ist.

7. Behälter nach Anspruch 6, dadurch gekennzeichnet, daß das Lochblech (23) unterhalb des Siphons (9) angeordnet ist und sich unter Bildung einer schiefen Ebene vom Boden der Überlaufkammer (2) bis zum Bodenblech (14) des Siphons (9) erstreckt.

8. Behälter nach einem der Ansprüche 1 bis 7, dadurch gekennzeichnet, daß die Rücklaufkammer (1) mit Anschlüssen für eine Ansaugleitung (37) und eine Rücklaufleitung (38) eines Separators versehen ist.

9. Behälter nach Anspruch 8, dadurch gekennzeichnet, daß die Ansaugleitung (37) in der unteren und die Rücklaufleitung (38) in der oberen Hälfte der Rücklaufkammer (1) in diese münden.

10. Behälter nach einem der Ansprüche 1 bis 9, dadurch gekennzeichnet, daß der Rücklaufkammer (1) ein Ultraschallsender (6) zugeordnet ist, dessen abgestrahlte Schallwellen auf den Inhalt der Rücklaufkammer (1) einwirken.

11. Behälter nach einem der Ansprüche 1 bis 10, dadurch gekennzeichnet, daß oben an die Ansaugkammer (3) die Ansaugseite eines Verdichters (29) einer Lufttrocknungseinrichtung angeschlossen ist, daß dem Verdichter (29) ein Wärmetauscher (30) nachgeschaltet ist, dessen Ausgang mit dem Eingang eines Zyklons (34) verbunden ist, und daß eine vom Zyklon (34) zum Behälter führende Rückleitung (35) in den Luftraum der Überlaufkammer (2) mündet.

12. Behälter nach Anspruch 11, dadurch gekennzeichnet, daß der Wärmetauscher (30) mit dem Zyklon (34) über eine Drosselstrecke (33) verbunden ist.

13. Behälter nach Anspruch 11 oder 12, dadurch gekennzeichnet, daß der Zyklon (34) einen eine der üblichen Umlaufrichtung entgegengesetzte Umlaufrichtung des im Zyklon (34) rotierenden Luft-Wasser-Gemisches ergebenden Einlaß hat.

14. Behälter nach einem der Ansprüche 11 bis 13, dadurch gekennzeichnet, daß der Zyklon (34) an seinem Boden eine Wasserauslaßöffnung hat, die mittels eines Auftriebkörpers verschließbar und freigebbar ist.

15. Behälter nach einem der Ansprüche 1 bis 14, dadurch gekennzeichnet, daß der Luftraum der Überlaufkammer (2) mit demjenigen der Ansaugkammer (3) über ein Verbindungsrohr (36) verbunden ist.

## Claims

1. Reclaiming tank containing oil with connections for a return pipe and a suction pipe, which is divided into a return chamber (1), an overflow chamber (2) and a suction chamber (3), the return chamber (1) being connected to the overflow chamber (2) by way of a siphon (9) and adjoining a rising section of the siphon (9) opening into the overflow chamber (2) is a drainage surface projecting into the overflow chamber (2) and falling towards its free end, characterised in that for pressure lubrication of a lubrication system
a) a channel (21) rising from the overflow chamber (2) towards the suction chamber (3) connects the two chambers (2, 3) to each other,
b) the drainage surface is partly immersed in the oil located in the overflow chamber (2) and
c) located above the drainage surface formed by an overflow plate (17) is a drainage distribution member (18) extending transversely to the direction of flow, which member (18) together with the overflow plate (17) forms a gap (20) of variable width.

2. Tank according to Claim 1, characterised in that provided in the base (7) of the return chamber (1) is at least one opening, from which a filter basket (8) extends into an adjoining, falling section (10) of the siphon (9).

3. Tank according to Claim 1 or 2, characterised in that the falling section (10) of the siphon (9) is connected by way of at least one channel (13) provided close beside the return chamber (1), to the inside of the return chamber (1) in the region of its upper end section.

4. Tank according to one of Claims 1 to 3, characterised in that both the falling as well as the rising section of the siphon (9) are limited by a common base plate (14) forming an inclined plane ascending from the falling to the rising section.

5. Tank according to one of Claims 1 to 4, characterised in that the falling section (10) of the siphon (9) is separated from the rising section (12) by a wall (11), whereof the lower end section (11') is bent towards the rising section (12) and together with the base plate (14) preferably forms a contraction.

6. Tank according to one of Claims 1 to 5, characterised in that the channel (21) connecting the overflow chamber (2) to the suction chamber (3) is limited on the side of the overflow chamber (2) by a perforated plate (23).

7. Tank according to Claim 6, characterised in that the perforated plate (23) is located below the siphon (9) and with the formation of an inclined plane extends from the base of the overflow chamber (2) as far as the base plate (14) of the siphon (9).

8. Tank according to one of Claims 1 to 7, characterised in that the return chamber (1) is provided with connections for a suction pipe (37) and a return pipe (38) of a separator.

9. Tank according to Claim 8, characterised in that the suction pipe (37) opens into the lower half of the return chamber (1) and the return pipe (38) opens into the upper half of the return chamber (1).

10. Tank according to one of Claims 1 to 9, characterised in that associated with the return chamber (1) is an ultrasound transmitter (6), whereof the radiated sound waves act on the contents of the return chamber (1).

11. Tank according to one of Claims 1 to 10, characterised in that connected at the top to the suction chamber (3) is the suction side of a compressor (29) of an air-drying device, that following the compressor (29) is a heat exchanger (30), whereof the output is connected to the input of a cyclone (34), and that a return pipe (35) leading from the cyclone (34) to the tank opens into the air space of the overflow chamber (2).

12. Tank according to Claim 11, characterised in that the heat exchanger (30) is connected to the cyclone (34) by way of a restrictor section (33).

13. Tank according to Claim 11 or 12, characterised in that the cyclone (34) has an inlet producing a direction of rotation of the air/water mixture rotating in the cyclone (34), in opposition to the normal direction of rotation.

14. Tank according to one of Claims 11 to 13, characterised in that at its base, the cyclone (34) has a water outlet opening, which can be closed and released by means of a float.

15. Tank according to one of Claims 1 to 14, characterised in that the air space of the overflow chamber (2) is connected to that of the suction chamber (3) by way of a connecting pipe (36).

## Revendications

1. Réservoir à circuit de retour, contenant de l'huile, comportant des raccords pour une conduite de retour et une conduite d'aspiration, lequel est divisé en une chambre de retour (1), une chambre de trop-plein (2) et une chambre d'aspiration (3), ladite chambre de retour (1) étant reliée à la chambre de trop-plein (2) par un siphon (9) et venant se raccorder à une section ascendante, débouchant dans ladite chambre de trop-plein (2) du siphon (9), constitué d'une face d'écoulement qui pénètre dans la chambre de trop-plein (2) et qui est inclinée en direction de son extrémité libre, caractérisé en ce que pour une lubrification à circuit d'huile d'un système de graissage
a) un canal (21) ascendant venant de la chambre de trop-plein (2) et allant à la chambre d'aspiration (3) relie ces deux chambres (2, 3) entre elle ;
b) la surface d'écoulement plonge partiellement dans l'huile se trouvant dans la chambre de trop-plein (2) ; et
c) au-dessus de la face d'écoulement constituée par une tôle de trop-plein (17) est disposé un élément distributeur (17) du trop-plein qui s'étend transversalement à la direction du flux, la tôle de trop-plein (17) et l'élément (18) formant entre eux un interstice (20) dont l'amplitude est modulable.

2. Réservoir selon la revendication 1, caractérisé en ce que, dans le fond (7) de la chambre de retour (1), est prévu au moins un orifice à partir duquel un panier filtre (8) pénètre dans une section (10) consécutive descendante du siphon (9).

3. Réservoir selon la revendication 1 ou 2, caractérisé en ce que la section descendante (10) du siphon (9) est en liaison, à travers au moins un canal (13) prévu à côté de la chambre de retour (1), avec l'intérieur de ladite chambre de retour (1), dans la zone de sa section terminale supérieure.

4. Réservoir selon l'une des revendications 1 à 3, caractérisé en ce que, tant la section descendante que la section ascendante du siphon (9), sont limitées par un fond en tôle (14) formant un plan oblique ascendant entre la section descendante et la section ascendante.

5. Réservoir selon l'une des revendications 1 à 4, caractérisé en ce que la section descendante (10) du siphon (9) est séparée de la section ascendante (12) par une paroi (11), dont la section terminale inférieure (11') est repliée en direction de la section ascendante (12) et forme, de préférence conjointement au fond en tôle (14), un rétrécissement.

6. Réservoir selon l'une des revendications 1 à 5, caractérisé en ce que le canal (21) reliant la chambre de trop-plein (2) à la chambre d'aspiration (3), est limité du côté de la chambre de trop-plein (2) par une tôle perforée (23).

7. Réservoir selon la revendication 6, caractérisé en ce que la tôle perforée (23) est disposée sous le siphon (9) et s'étend, en formant un plan oblique, entre le fond de la chambre de trop-plein (2) jusqu'au fond de tôle (14) dudit siphon (9).

8. Réservoir selon l'une des revendications 1 à 7, caractérisé en ce que la chambre de retour (1) est munie de raccords pour une conduite d'aspiration (37) et une conduite de retour (38) et d'un séparateur.

9. Réservoir selon la revendication 8, caractérisé en ce que la conduite d'aspiration (37) débouche dans la moitié inférieure, et la conduite de retour (38) dans la moitié supérieure de la chambre de retour (1).

10. Réservoir selon l'une des revendications 1 à 9, caractérisé en ce qu'à la chambre de retour (1) est associé un émetteur d'ultrasons (6) dont les ondes sonores émises agissent sur le contenu de ladite chambre de retour (1).

11. Réservoir selon l'une des revendications 1 à 10, caractérisé en ce que, en haut, à la chambre d'aspiration (3), est raccordé le côté aspiration d'un compresseur (29) d'un dispositif de dessiccation de l'air, en ce que en aval de ce compresseur (29) est monté un échangeur de chaleur dont la sortie est reliée à l'entrée d'un cyclone (34), et en ce qu'une conduite de retour (35), conduisant du cyclone (34) au réservoir, débouche dans l'espace libre de la chambre de trop-plein (2).

12. Réservoir selon la revendication 11, caractérisé en ce que l'échangeur de chaleur (30) est relié au cyclone (34) à travers un segment étrangleur (33).

13. Réservoir selon la revendication 11 ou 12, caractérisé en ce que l'orifice d'admission du cyclone (34) est tel que le mélange air-eau en rotation à l'intérieur de celui-ci, tourne dans une direction opposée à celle du circuit habituel.

14. Réservoir selon l'une des revendications 11 à 13, caractérisé en ce que le cyclone (34) possède sur son fond un orifice d'échappement d'eau qui peut être obturé et dégagé au moyen d'un corps ascendant.

15. Réservoir selon l'une des revendications 1 à 14, caractérisé en ce que l'espace libre de la chambre de trop-plein (2) est relié à celui de la chambre d'aspiration (3) à travers un tube de liaison (36).
